# EUROPEAN PATENT SPECIFICATION

(11) **EP 3 468 261 B1**
(45) Date of publication and mention of the grant of the patent: **21.04.2021**
(21) Application number: 16902950.1
(22) Date of filing: 31.10.2016
(51) Int. Cl.: H04W 52/02, G06K 19/07

(54) **CONTROL METHOD AND APPARATUS FOR SMART CARD, TERMINAL DEVICE, AND SMART CARD**
STEUERUNGSVERFAHREN UND -VORRICHTUNG FÜR CHIPKARTE, ENDGERÄTEVORRICHTUNG UND CHIPKARTE
PROCÉDÉ ET APPAREIL DE COMMANDE POUR CARTE À PUCE, DISPOSITIF TERMINAL ET CARTE À PUCE

(30) Priority: 23.05.2016 CN 201610346192
(43) Date of publication of application: 10.04.2019
(73) Proprietor: ZTE Corporation, Shenzhen, Guangdong 518057 (CN)
(72) Inventor: WU, Chuanxi, Shenzhen Guangdong 518057 (CN)
(74) Representative: Brunazzi, Stefano
(86) International application number: PCT/CN2016/104074
(87) International publication number: WO 2017/201966

(56) References cited:
- EP-A1- 2 836 052
- CN-A- 102 256 345
- CN-A- 102 622 079
- CN-A- 103 686 687

## Description

### Technical Field

The present invention relates to the technical field of communication, and particularly to a smart card control method and device, a terminal device and a smart card.

### Background

Along with development of mobile communication, network coverage has become increasingly wider and mobile services have also been gradually developed from voice communication dominated services to data service dominated Rich Communication Suite (RCS). In recent years, the Internet of Things (loT), as an important part of emerging high-tech industries, has been adopted by various countries in the world as one of important technologies for coping with economic crises and revitalizing the economy. loT services may be widely applied to many industries, including vehicles, power, finance, environmental protection, petroleum, personal and enterprise security, hydrology, military affairs, firefighting, meteorology, coal, agriculture and forestry, elevators and the like. loT application will also become one of core applications of 5th Generation (5G) after a plurality of years and has broad development prospect.

The mobile Internet bearer-based loT is becoming more and more important and is applied to scenarios where wires may be arranged not so conveniently and which is relatively high in wiring cost and some other special scenarios, for example, places of remote logistic transportation and monitoring, remote control of "three energy meters", monitoring and control of field equipment, tracking of children and the oldest old, police management and criminal tracking. loT terminals are usually powered by batteries and there is made such a requirement that the batteries of the terminals can be used for long without change (for example, a half year or a longer time, the longer the better). Therefore, promoting development of the mobile-Internet-based loT industry will inevitably be confronted with a challenge about power consumption of such loT terminals.

The European Patent Application EP 2 836 052 A1 describes a method and device for data secrecy based on embedded Universal Integrated Circuit Card, and provides related technical solutions; however, the above mentioned problem still remains unsolved.

### Summary

The present invention is intended to provide a smart card control method and device, a terminal device and a smart card, which may reduce energy consumption of the terminal device and prolong service time of a battery of the terminal device.

According to a first aspect, embodiments of the present invention provide a method for controlling a smart card, which may include that:
a suspension command is transmitted to a smart card; and
a recovery information keyword returned by the smart card according to the suspension command and configured to recover the smart card from a suspended state is received.

After the step that the recovery information keyword returned by the smart card according to the suspension command and configured to recover the smart card from the suspended state is received, the control method is characterized in that a turn-off instruction is sent to a power supply of the smart card.

Other aspects appears evident from the wording of the appended claims.

Compared with a conventional art, the smart card control method and device, terminal device and smart card provided by the embodiments of the present invention have the advantages that the suspension command is transmitted to the smart card, so that the power supply of the smart card may be removed, power consumption of the smart card may be reduced, energy consumption of the terminal device may be reduced and service time of a battery of the terminal device may be prolonged.

### Brief Description of the Drawings

For describing the technical solutions of the embodiments of the present invention more clearly, the drawings required to be used for descriptions about the embodiments of the present invention will be simply introduced below. It is apparent that the drawings described below are only some embodiments of the present invention. Those of ordinary skill in the art may further obtain other drawings according to these drawings without creative work.
Fig. 1 is a first flow block diagram of a method for controlling a smart card according to a first embodiment of the present invention;
Fig. 2 is a second flow block diagram of a method for controlling a smart card according to a first embodiment of the present invention;
Fig. 3 is a third flow block diagram of a method for controlling a smart card according to a first embodiment of the present invention;
Fig. 4 is a first flow block diagram of a method for controlling a smart card according to a second embodiment of the present invention;
Fig. 5 is a second flow block diagram of a method for controlling a smart card according to a second embodiment of the present invention;
Fig. 6 is a first structure block diagram of a device for controlling a smart card according to a third embodiment of the present invention;
Fig. 7 is a second structure block diagram of a device for controlling a smart card according to a third embodiment of the present invention;
Fig. 8 is a third structure block diagram of a device for controlling a smart card according to a third embodiment of the present invention;
Fig. 9 is a first structure block diagram of a device for controlling a smart card according to a fourth embodiment of the present invention;
Fig. 10 is a second structure block diagram of a device for controlling a smart card according to a fourth embodiment of the present invention;
Fig. 11 is a schematic diagram of a Universal Integrated Circuit Card (UICC) state machine according to a specific embodiment of the present invention;
Fig. 12 is a flow block diagram of a UICC suspension step according to a specific embodiment of the present invention; and
Fig. 13 is a flow block diagram of a UICC recovery step according to a specific embodiment of the present invention.

### Detailed Description of the Embodiments

In order to make the technical problem to be solved, technical solutions and advantages of the present invention clearer, detailed descriptions will be made below in combination with the drawings and specific embodiments.

In the conventional art, loT terminals or communication modules are all secondarily developed in an application layer on the basis of a mobile public network terminal chip platform and protocol. Scenarios of application to the loT industry are not considered and thus flow control and terminal power consumption are unlikely to meet requirements of application of loT terminals to application scenarios where wires may be arranged not so conveniently and which are relatively high in wiring cost and some other special scenarios.

In fact, the condition that, in a power cycle of an existing mobile terminal, a UICC of the terminal is activated for use mainly includes the following conditions: the terminal reads and stores a configuration parameter set by an operating company in the UICC, the terminal executes an authentication process, the terminal writes data into the UICC, the terminal reads short messages and phonebook, stored on the UICC, of a user, a card toolbox command is used and the like. At other times, the UICC of the terminal is not activated.

In addition, it is estimated in the industry that, for the condition that power of a UICC is cut off and the condition that the power of the UICC is not cut off in an loT terminal, power consumption generated by the UICC under the latter condition in a week is about 40 times that generated under the former condition.

Meanwhile, in an loT terminal, mobile Internet scenarios may be divided into the following major categories according to mobile Internet application characteristics and service modes.
(1) A fixed or low-mobility loT terminal application scenario
   For fixed or low-mobility loT devices (for example, three meters and transformer monitoring terminals), these devices are usually located in a fixing location invariable or low-mobility application scenario.
(2) A communication time limit restricted and constrained scenario
   The scenario refers to a scenario where data transmission and reception and communication are performed according to a preset specific time interval and a terminal is in an off state at other times. An loT platform may allow or refuse service access of a terminal device outside a preset specific time limit. For a forbidding time period, the platform directly refuses access. By use of this characteristic, the terminal device may access and communicate in the preset specific time limit and is in a low-power-consumption state at other times.
(3) A scenario only supporting caller services, i.e., a scenario where an loT device only supports caller services: the scenario requires the loT terminal device to periodically or aperiodically report information to the platform but not receive indications or information transmitted by the platform.
(4) An infrequent callee service scenario

For the infrequent callee service scenario, a probability that the terminal accepts and responds to paging is very low.

From the above, it can be seen that most loT terminals are in an inactive state in most of time when being used.

On such a basis, the embodiments of the present invention disclose a method for controlling a smart card and device, a terminal device and a smart card to reduce energy consumption of the terminal device, prolong service time of a battery of the terminal device and meet an increasing loT application requirement. An implementation concept thereof is to modify and optimize a communication protocol for the terminal device and the smart card to reduce power consumption of the smart card on the premise of not changing hardware of a network side and the terminal device, thereby reducing average power consumption of the terminal device to achieve the purpose of prolonging the service time of the battery of the terminal device.

The terminal device described in the embodiments of the present invention may be a mobile terminal including a mobile phone, a tablet computer, a notebook computer and the like and may also be a Machine to Machine (M2M) terminal including three meters, a transformer monitoring terminal and the like. The smart card described in the embodiments of the present invention may include a UICC, Embedded Universal Integrated Circuit Card (e_UICC), Subscriber Identity Module (SIM) card, Removable User Identity Module (R-Uim) card, e-Sim card, M2M card and various other smart cards which may be judged by professionals as SIM cards in the field of mobile communication.

### First embodiment

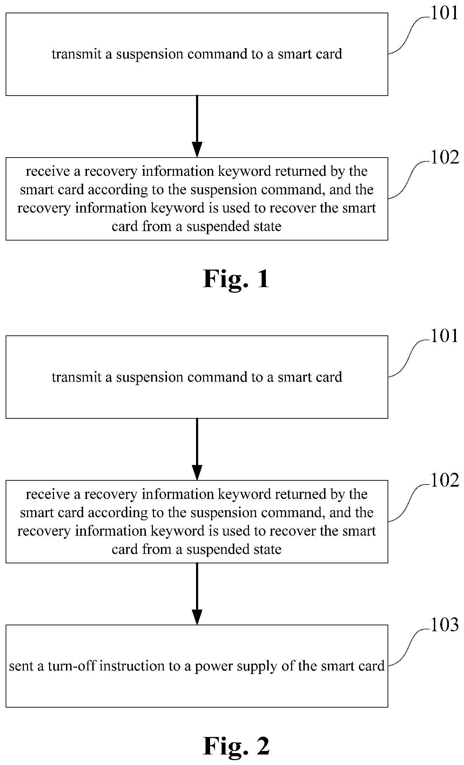

Referring to Fig. 1, a first flow block diagram of a method for controlling a smart card according to the invention is illustrated. The smart card control method provided by the first embodiment of the present invention is applied to a terminal device. The control method may include the following steps.

In 101, a suspension command is transmitted to a smart card.

In 102, a recovery information keyword returned by the smart card according to the suspension command and configured to recover the smart card from a suspended state is received.

Herein, after the suspension command is sent to the smart card, the recovery information keyword returned by the smart card according to the suspension command is received for subsequent steps. The recovery information keyword is configured to subsequently recover the smart card from the suspended state according to the recovery information keyword. The recovery information keyword may be stored in a memory of the terminal device.

Referring to Fig. 2, a second flow block diagram of the smart card control method according to the first embodiment of the present invention is illustrated. Furthermore, in some optional implementation modes, after the operation in 102 that the recovery information keyword returned by the smart card according to the suspension command and configured to recover the smart card from the suspended state is received, the control method may further include the following steps.

In 103, a turn-off instruction is sent to a power supply of the smart card.

Herein, after the recovery information keyword returned by the smart card according to the suspension command and configured to recover the smart card from the suspended state is received, the turn-off instruction is sent to the power supply of the smart card to turn off the power supply of the smart card to reduce power consumption of the smart card, reduce average power consumption of the terminal device and prolong service time of a battery of the terminal device.

Before the operation in 101 that the suspension command is transmitted to the smart card, the control method may further include the following step.

Whether a suspension condition of the smart card is presently reached or not is detected and, when determining that the suspension condition is reached, the step that the suspension command is transmitted to the smart card is executed.

Herein, the step that it is determined that the suspension condition is reached may specifically be implemented in multiple manners, for example, the following two manners.

### A first manner

A first present state of the smart card is detected and, when detecting that the smart card is in an idle state, it is determined that the suspension condition is reached and the suspension command is transmitted to the smart card.

Herein, the present state of the smart card is directly detected and acquired to judge and determine whether the suspension condition of the smart card is reached or not. The present state of the smart card may include the idle state and an active state. When detecting that the present state of the smart card is the idle state, it may be determined that the suspension condition of the smart card is reached, thereby sending the suspension command to the smart card.

### A second manner

A second present state of the terminal device is detected and, when detecting that the terminal device is in a standby state, it is determined that the suspension condition is reached and the suspension command is transmitted to the smart card.

Herein, the present state of the terminal device is detected, thereby judging and determining whether the suspension condition is reached or not. When detecting that the terminal device is in the standby state, it may be determined that the suspension condition is reached, thereby transmitting the suspension command to the smart card. Of course, the manner of determining that the suspension condition is reached according to the present state of the terminal device is not limited to detection about whether the terminal device is in the standby state or not and there are no limits made in the embodiment.

During a practical operation, one of the two manners may be independently adopted and the two manners may also be combined.

In some optional implementation modes, before the step that whether the suspension condition of the smart card is presently reached or not is detected, the control method may further include the following steps.

A preconfigured first EF is read.

Herein, whether the terminal device supports the suspended state of the smart card or not is detected at first. Then, when the terminal device supports the suspended state of the smart state, the preconfigured first EF of the smart card is read. The first EF or a predetermined bit in the first EF is adopted to indicate whether the smart card supports the suspended state or not. The predetermined bit may be set according to a practical application requirement to be, for example, one bit. In addition, the first EF may be preconfigured in the smart card.

When determining that the smart card supports the suspended state, the step that whether the suspension condition of the smart card is presently reached or not is detected is executed according to the first EF.

Herein, according to the first EF, when it is read that the first EF indicates that the smart support the suspended state, whether the smart card reaches the suspension condition or not is detected.

In some optional implementation modes, in the operation in 101 that the suspension command is transmitted to the smart card, the suspension command may include a maximum suggested suspension time length.

After the operation in 102 that the recovery information keyword returned by the smart card according to the suspension command and configured to recover the smart card from the suspended state is received, the control method may further include that: a determined suspension time length returned by the smart card is received.

Herein, the suspension command sent to the smart card includes the maximum suggested suspension time length, then a suggested suspension time length is transmitted to the smart card and the suspension time length determined by the smart card and returned by the smart card is correspondingly received.

In addition, in some optional implementation modes, the smart card may send the recovery information keyword to the terminal device in a manner of returning suspension response data. That is, the suspension response data includes the recovery information keyword. Correspondingly, a terminal device side receives the suspension response data sent by the smart card in response to the suspension command to acquire the recovery information keyword. The suspension response data may further include the determined suspension time length.

In the implementation mode, an Application Protocol Data Unit (APDU) structure of the suspension command and a structure of the suspension response data (the structures are consistent with the standard ETSI TS 102 221) may be defined as follows.

| Code | Value |
|---|---|
| CLA | The length is a byte and represents the specific instruction |
| INS | The length is a byte and represents the specific instruction code |
| P1 | The length is a byte, instruction parameter 1 |
| P2 | The length is a byte, instruction parameter 2 |
| Lc | The length is zero byte or a byte, a byte number of a command data field |
| Data | The length is Lc, command data string |
| Le | The length is a byte, length of the recovery information keyword |

| Byte(s) | Description | Length |
|---|---|---|
| 1 to Le | Value of the recovery information keyword | Le |

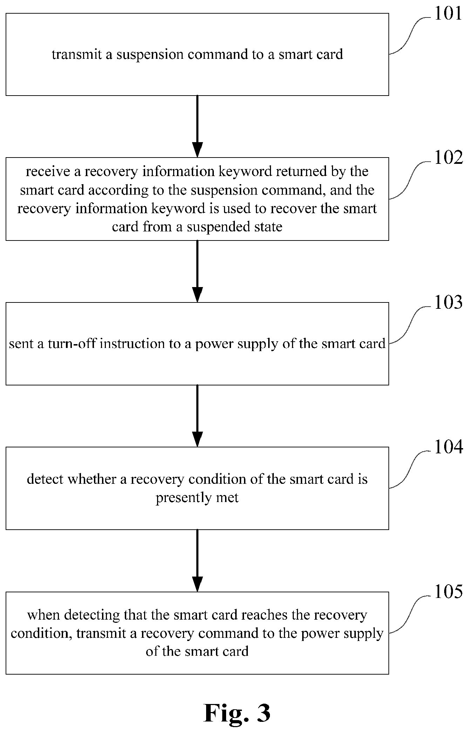

In a practical application scenario, at a certain moment, the smart card is required to be recovered from the suspended state. In such case, referring to Fig. 3, a third flow block diagram of the smart card control method according to the first embodiment of the present invention is illustrated. In some optional implementation modes of the first embodiment of the present invention, after the operation in 102 that the recovery information keyword returned by the smart card according to the suspension command and configured to recover the smart card from the suspended state is received, the control method may further include the following steps.

In 104, whether a recovery condition of the smart card is presently met or not is detected.

Herein, whether the smart card presently meets the recovery condition or not is detected for subsequent steps.

In 105, when detecting that the smart card reaches the recovery condition, a recovery instruction is transmitted to the power supply of the smart card and a recovery command is transmitted to the smart card.

Herein, when detecting that the smart card reaches the recovery condition, the recovery instruction is sent to the power supply of the smart card to recover the power supply of the smart card and the recovery command is sent to the smart card to recover the smart card into a state before suspension according to the recovery command. The recovery condition of the smart card may be that an application in the smart card is required to be run. Of course, when the smart card is in the following scenarios: the smart card is executing a normal initialization process, the smart card is receiving a TERMINAL PROFILE command (active command) and/or the smart card is executing any EF name selection command, in such case, the smart card is inconsistent with the recovery condition and the smart card may refuse to execute the recovery command. Of course, the above scenarios inconsistent with the recovery condition of the smart card are only exemplary descriptions and there are no limits made in the embodiment.

In the operation in 105 that the recovery command is transmitted to the smart card, the recovery command may include the recovery information keyword. Herein, through the recovery information keyword in the recovery command, the smart card receives the recovery information keyword and is recovered from the suspended state to the state before suspension according to the recovery information keyword.

In the embodiment, an APDU structure of the recovery command (the structure is consistent with the standard ETSI TS 102 221) may be defined as follows.

| Code | Value |
|---|---|
| CLA | The length is a byte and represents the specific instruction |
| INS | The length is a byte and represents the specific instruction code |
| P1 | The length is a byte, instruction parameter 1 |
| P2 | The length is a byte, instruction parameter 2 |
| Lc | Length of the recovery information keyword |
| Data | The recovery information keyword |
| Le | The length is zero byte or a byte |

Data is as follows:

| Byte(s) | Description | Length |
|---|---|---|
| 1 to Lc | Value of the recovery information keyword | Lc |

In some optional implementation modes, before the operation in 104 that whether the recovery condition of the smart card is presently met or not is detected, the control method may further include the following steps.

A preconfigured second EF is read.

Herein, whether the terminal device supports a recovered state of the smart card or not is detected at first. When the terminal device supports the recovered state of the smart card, the preconfigured second EF of the smart card is read. The second EF or a predetermined bit in the second EF is adopted to indicate whether the smart card supports the recovered state or not. The predetermined bit may be set according to a practical application requirement to be, for example, one bit. In addition, the second EF may be preconfigured in the smart card.

When determining according to the second EF that the smart card supports the recovered state, whether the smart card reaches the recovery condition or not is detected.

Herein, according to the second EF, when it is read that the second EF indicates that the smart card supports the recovered state, whether the smart card reaches the recovery condition or not is detected.

In addition, in some optional implementation modes, the first EF and the second EF may be configured into the same EF 1 and the EF 1 or a predetermined (for example, one bit) in the EF 1 is adopted to indicate whether the smart card supports the suspended state and the recovered state or not.

According to the smart card control method provided by the first embodiment of the present invention, the suspension command is transmitted to the smart card, so that the power supply of the smart card may be turned off, the power consumption of the smart card may be reduced, the energy consumption of the terminal device is further reduced and the service time of the battery of the terminal is prolonged.

### Second embodiment

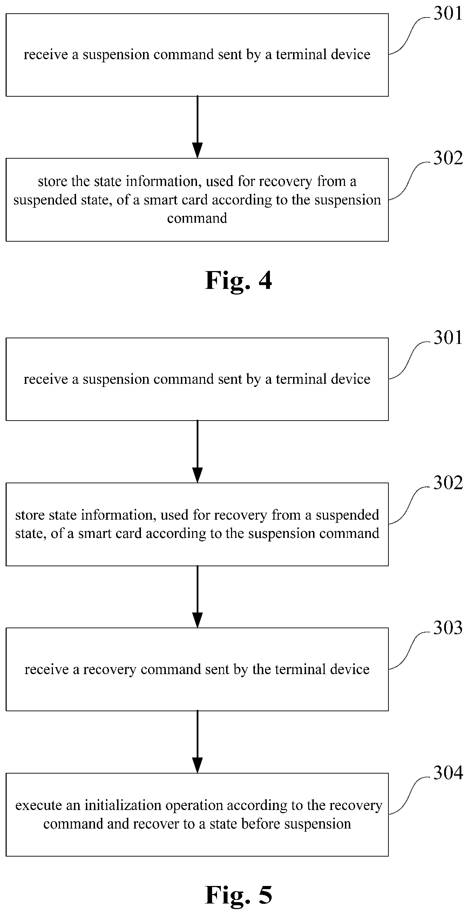

Referring to FIG. 4, a first flow block diagram of A method for controlling a smart card according to the second embodiment of the present invention is illustrated. The smart card control method provided by the second embodiment of the present invention is applied to a smart card. The control method may include the following steps.

In 301, a suspension command sent by a terminal device is received.

Herein, the terminal device transmits the suspension command to the smart card. In such case, a smart card side receives the suspension command sent by the terminal device. Specifically, the suspension command transmitted by the terminal device may be received after the terminal device detects that a suspension condition of the smart card is reached.

Multiple manners may be adopted to determine that the suspension condition of the smart card is reached, for example, determination according to a present state of the smart card, the present state of the smart card including an idle state and an active state, that is, it is determined that the suspension condition of the smart card is reached when detecting, by the terminal device, that the smart card is in the idle state; and/or, determination according to a present state of the terminal device, that is, it may be determined that the suspension condition is reached when detecting, by the terminal device, that the terminal device is in a standby state. Of course, the manner of determining that the suspension condition is reached according to the present state of the terminal device is not limited to detection about whether the terminal device is in the standby state or not and there are no limits made in the embodiment.

In 302, state information, used for recovery from a suspended state, of the smart card is stored according to the suspension command.

Herein, after the suspension command sent by the terminal device is received, the smart card stores present state information for recovery from the suspended state according to the suspension command.

In some optional implementation modes, after the operation in 302 that the state information, used for recovery from the suspended state, of the smart card is stored according to the suspension command, the control method may further include the following step:
a recovery information keyword used for recovery from the suspended state is sent to the terminal device.

Herein, the recovery information keyword is sent to the terminal device according to the suspension command sent by the terminal device. The recovery information keyword is sent to the terminal device for the terminal device to receive and store to recover the smart card from the suspended state.

The state information may include, but not limited to, a state of an NAA selected by each logical channel of the smart card, a security condition of each NAA, an EF selected by each logical channel, corresponding records and a state of a card application toolbox.

Herein, the smart card stores the present state information of the smart card for subsequent recovery of the smart card into a state before suspension according to the state information. The state information may be stored in a non-volatile memory of the smart card.

In some optional implementation modes, in the operation in 301 that the suspension command sent by the terminal device is received, the suspension command includes a maximum suggested suspension time length.

After the operation in 302 that the state information, used for recovery from the suspended state, of the smart card is stored according to the suspension command, the control method may further include that: a determined suspension time length is sent to the terminal device.

Herein, the received suspension command includes the maximum suggested suspension time length, then a suggested suspension time length transmitted by the terminal device is acquired and the suspension time length determined by the smart card may be sent to the terminal device.

In addition, in some optional implementation modes, the smart card may send the recovery information keyword to the terminal device in a manner of returning suspension response data. That is, the suspension response data includes the recovery information keyword. Correspondingly, a terminal device side receives the suspension response data sent by the smart card in response to the suspension command to acquire the recovery information keyword. The suspension response data may further include the determined suspension time length.

In the implementation mode, an APDU structure of the suspension command and a structure of the suspension response data (the structures are consistent with the standard ETSI TS 102 221) may be defined as follows.

| Code | Value |
|---|---|
| CLA | The length is a byte and represents the specific instruction |
| INS | The length is a byte and represents the specific instruction code |
| P1 | The length is a byte, instruction parameter 1 |
| P2 | The length is a byte, instruction parameter 2 |
| Lc | The length is zero byte or a byte, a byte number of a command data field |
| Data | The length is Lc, command data string |
| Le | The length is a byte, length of the recovery information keyword |

| Byte(s) | Description | Length |
|---|---|---|
| 1 to Le | Value of the recovery information keyword | Le |

In addition, a first EF may be preconfigured in the smart card, and then the terminal device may read the first EF, thereby determining whether the smart card supports the suspended state or not. The first EF or a predetermined bit (for example, one bit) in the first EF is adopted to indicate whether the smart card supports the suspended state or not.

In a practical application scenario, at a certain moment, the smart card is required to be recovered from the suspended state. In such case, referring to Fig. 5, a second flow block diagram of the smart card control method according to the second embodiment of the present invention is illustrated. In some optional implementation modes of the second embodiment of the present invention, after the operation in 302 that the state information, used for recovery from the suspended state, of the smart card is stored according to the suspension command, the control method may further include the following steps.

In 303, a recovery command sent by the terminal device is received.

Herein, when detecting, by the terminal device, that the smart card meets the recovery condition, a recovery instruction is transmitted to a power supply of the smart card and the recovery command is transmitted to the smart card. In such case, the smart card side receives the recovery command sent by the terminal device.

In 304, an initialization operation is executed according to the recovery command and a state before suspension is recovered.

Herein, the smart card side is recovered into the state before suspension according to the recovery command sent by the terminal device. Before the smart card is recovered into the state before suspension, the initialization operation is executed to reduce occurrence of the condition of a recovery error of the smart card.

In an optional implementation mode, the operation in 304 that the initialization operation is executed according to the recovery command and the state before suspension is recovered, the control method further includes the following step.

Whether a first condition is presently met or not is judged and, if NO, the step that the initialization operation is executed according to the recovery command and the state before suspension is recovered is executed.

The first condition includes execution of an initialization process, reception of a TERMINAL PROFIL command and/or execution of any basic file name selection command.

Herein, when the smart card is in the following scenarios: the smart card is executing a normal initialization process, the smart card is receiving a TERMINAL PROFILE command (active command) and/or the smart card is executing any EF name selection command, in such case, the smart card is consistent with the first condition and namely inconsistent with the recovery condition and the smart card may refuse to execute the recovery command. Herein, an error response may be sent to the terminal device, the error response including a state word, to notify an error cause to the terminal device. Of course, the above scenarios inconsistent with the recovery condition of the smart card are only exemplary descriptions and there are no limits made in the embodiment.

In some optional implementation modes, the operation in 304 that the state before suspension is recovered may include the following step:
the state before suspension is recovered according to the recovery information keyword in the recovery command and the state information stored in the non-volatile memory of the smart card.

Herein, the recovery command received from the terminal device includes the recovery information keyword and the recovery information keyword is matched with the state information stored in the non-volatile memory before suspension of the smart card, thereby recovering the smart card into the state before suspension.

In some optional implementation modes, after the operation in 304 that the recovery card is recovered into the state before suspension according to the recovery command, the control method may further include the following step:
the state information corresponding to the recovery information keyword is deleted.

In addition, in some optional implementation modes, an APDU structure of the recovery command (the structure is consistent with the standard ETSI TS 102 221) may be defined as follows.

| Code | Value |
|---|---|
| CLA | The length is a byte and represents the specific instruction |
| INS | The length is a byte and represents the specific instruction code |
| P1 | The length is a byte, instruction parameter 1 |
| P2 | The length is a byte, instruction parameter 2 |
| Lc | Length of the recovery information keyword |
| Data | The recovery information keyword |
| Le | The length is zero byte or a byte |

Data is as follows:

| Byte(s) | Description | Length |
|---|---|---|
| 1 to Lc | Value of the recovery information keyword | Lc |

In addition, a second EF may be preconfigured in the smart card, and then the terminal device may read the second EF, thereby determining whether the smart card supports a recovered state or not. The second EF or a predetermined bit (for example, one bit) in the second EF is adopted to indicate whether the smart card supports the recovered state or not. Moreover, the first EF and the second EF may be configured into the same file, called an EF 1, and the EF 1 or a predetermined bit (for example, one bit) in the EF 1 is adopted to indicate whether the smart card supports the suspended state and the recovered state or not.

According to the smart card control method provided by the second embodiment of the present invention, the suspension command sent by the terminal device is received and the state information, used for recovery from the suspended state, of the smart card is stored according to the suspension command, so that the terminal device may turn off the power supply of the smart card, power consumption of the smart card may be reduced, energy consumption of the terminal device is further reduced and service time of a battery of the terminal device is prolonged.

### Third embodiment

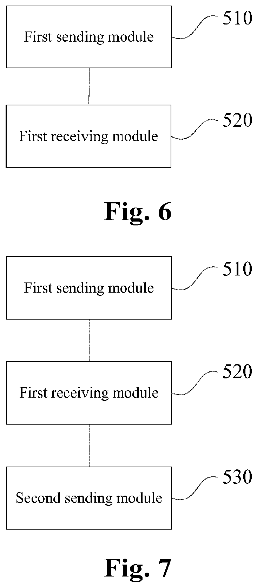

On the basis of the smart card control method provided by the first embodiment and applied to the terminal device, the third embodiment of the present invention provides a device configured to implement the method. Referring to Fig. 6, a first structure block diagram of the smart card control device according to the third embodiment of the present invention is illustrated. The smart card control device provided by the third embodiment of the present invention is applied to the terminal device. The control device may include a first sending module 510 and a first receiving module 520.

The first sending module 510 is configured to transmit a suspension command to a smart card.

The first receiving module 520 is configured to receive a recovery information keyword returned by the smart card according to the recovery command and configured to recover the smart card from a suspended state.

Referring to Fig. 7, a second structure block diagram of the smart card control device according to the third embodiment of the present invention is illustrated. Furthermore, in some optional implementation modes, the control device may further include a second sending module 530.

The second sending module 530 is configured to send a turn-off instruction to a power supply of the smart card.

In some optional implementation modes, the control device further includes a processing module.

The processing module is configured to detect whether a suspension condition of the smart card is presently reached or not and, when determining that the suspension condition is reached, execute the step of transmitting the suspension command to the smart card.

In some optional implementation modes, the processing module may include a first processing unit and/or a second processing unit.

The first processing unit is configured to detect a first present state of the smart card and, when detecting that the smart card is in an idle state, determine that the suspension condition is reached and transmit the suspension command to the smart card; and/or
the second processing unit is configured to detect a second present state of a terminal device and, when detecting that the terminal device is in a standby state, determine that the suspension condition is reached and transmit the suspension command to the smart card.

In some optional implementation modes, the control device may further include a first reading module and a first determination module.

The first reading module is configured to read a preconfigured first EF.

The first determination module is configured to, when determining according to the first EF that the smart card supports the suspended state, execute the step of detecting whether the suspension condition of the smart card is presently reached or not.

In some optional implementation modes, the suspension command transmitted to the smart card by the first sending module 510 may include a maximum suggested suspension time length. The control device may further include a second receiving module.

The second receiving module is configured to receive a determined suspension time length returned by the smart card.

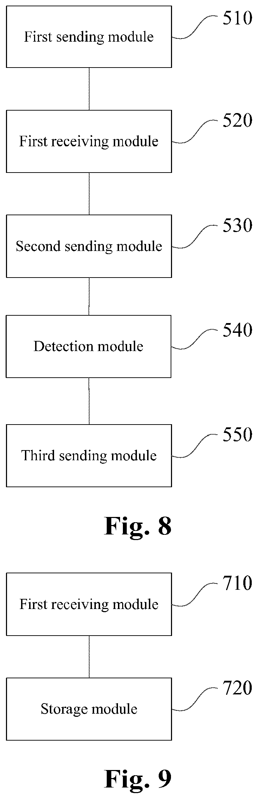

For adaptation to recovery of the smart card from the suspended state in a practical application scenario, referring to Fig. 8, a third structure block diagram of the smart card control device according to the third embodiment of the present invention is illustrated. In some optional implementation modes of the third embodiment of the present invention, the control device may further include a detection module 540 and a third sending module 550.

The detection module 540 is configured to detect whether a recovery condition of the smart card is presently reached or not.

The third sending module 550 is configured to, when detecting that the smart card reaches the recovery condition, transmit a recovery instruction to the power supply of the smart card and transmit a recovery command to the smart card.

In some optional implementation modes, the recovery command transmitted to the smart card by the third sending module 550 may include the recovery information keyword.

In some optional implementation modes, the control device may further include a second reading module and a second determination module.

The second reading module is configured to read a preconfigured second EF.

The second determination module is configured to, when determining according to the second EF that the smart card supports a recovered state, detect whether the smart card reaches the recovery condition or not.

The smart card control device provided by the third embodiment belongs to the same concept of the smart card control method provided by the first embodiment and details about a specific implementation process thereof refer to the first embodiment and, for avoiding repetitions, will not be elaborated herein.

According to the smart card control device provided by the third embodiment of the present invention, when detecting that the smart card reaches the suspension condition, the suspension command is transmitted to the smart card, so that the power supply of the smart card may be turned off when the smart card meets the suspension condition, power consumption of the smart card is reduced, energy consumption of the terminal device is further reduced and service time of a battery of the terminal device is prolonged.

In addition, the third embodiment of the present invention also provides a terminal device, which includes the smart card control device applied to the terminal device.

Since any abovementioned smart card control device has the foregoing technical effect, the terminal device with the smart card control device also has the corresponding technical effect and a specific implementation process thereof is similar to the abovementioned embodiment and will not be elaborated herein.

### Fourth embodiment

On the basis of the smart card control method provided by the second embodiment and applied to the smart card, the fourth embodiment of the present invention provides a device configured to implement the method. Referring to Fig. 9, a first structure block diagram of the smart card control device according to the fourth embodiment of the present invention is illustrated. The smart card control device provided by the fourth embodiment of the present invention is applied to the smart card. The control device may include a first receiving module 710 and a storage module 720.

The first receiving module 710 is configured to receive a suspension command sent by a terminal device.

The storage module 720 is configured to store state information, used for recovery from a suspended state, of a smart card according to the suspension command.

The control device may further include a first sending module.

The first sending module is configured to send a recovery information keyword used for recovery from the suspended state to the terminal device.

The state information may include a state of an NAA selected by each logical channel of the smart card, a security condition of each NAA, an EF selected by each logical channel, corresponding records and a state of a card application toolbox.

In some optional implementation modes, the suspension command received by the first receiving module 710 from the terminal device may include a maximum suggested suspension time length. The control device may further include a second sending module.

The second sending module is configured to send a determined suspension time length to the terminal device.

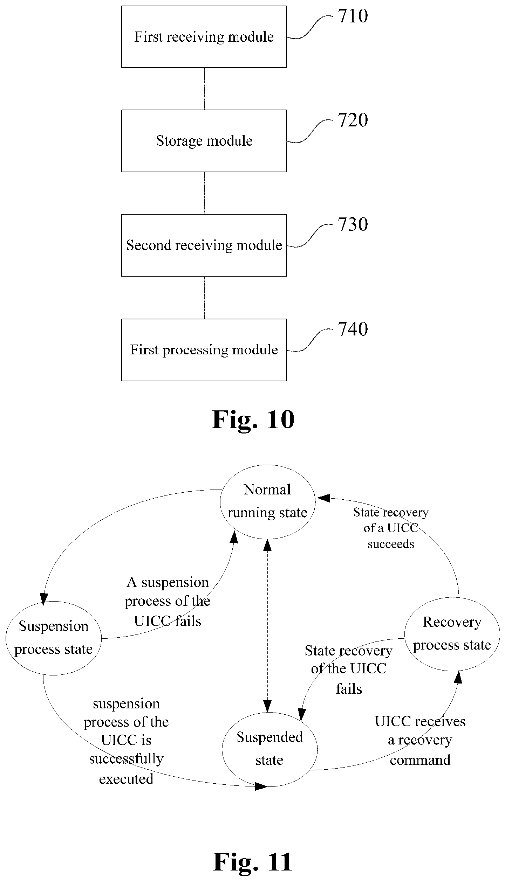

For adaptation to recovery of the smart card from the suspended state in a practical application scenario, referring to Fig. 10, a second structure block diagram of the smart card control device according to the fourth embodiment of the present invention is illustrated. In some optional implementation modes of the fourth embodiment of the present invention, the control device may further include a second receiving module 730 and a first processing module 740.

The second receiving module 730 is configured to receive a recovery command sent by the terminal device.

The first processing module 740 is configured to execute an initialization operation according to the recovery command and recover a state before suspension.

In some optional implementation modes, the first processing module 740 may include a processing unit.

The processing unit is configured to recover the state before suspension according to the recovery information keyword in the recovery command and the state information stored in a non-volatile memory of the smart card.

In some optional implementation modes, the control device may further include a deletion module.

The deletion module is configured to delete the state information corresponding to the recovery information keyword.

The control device may further include a second processing module.

The second processing module is configured to judge whether a first condition is presently met or not and, if NO, execute the step of executing the initialization operation according to the recovery command and recovering the state before suspension.

The first condition includes: execution of an initialization process, reception of a TERMINAL PROFIL command and/or execution of any EF name selection command.

The smart card control device provided by the fourth embodiment belongs to the same concept of the smart card control method provided by the second embodiment and details about a specific implementation process thereof refer to the second embodiment and, for avoiding repetitions, will not be elaborated herein.

According to the smart card control device provided by the fourth embodiment of the present invention, the suspension command sent by the terminal device is received and, when the suspension command, suspension response data is sent to the terminal device, so that the terminal device turns off the power supply of the smart card when the smart card meets the suspension condition, power consumption of the smart card is reduced, energy consumption of the terminal device is further reduced and service time of a battery of the terminal device is prolonged.

In addition, the fourth embodiment of the present invention also provides a smart card, which includes the smart card control device applied to the smart card.

Since any abovementioned smart card control device has the foregoing technical effect, the smart card with the smart card control device also has the corresponding technical effect and a specific implementation process thereof is similar to the abovementioned embodiment and will not be elaborated herein.

The present invention will be described below with a more specific example of A method for controlling a smart card in more detail. In the example a smart card is a UICC and a terminal device is an loT terminal (M2M terminal), called a terminal for short.

Referring to Fig. 11, a schematic diagram of a UICC state machine according to the example is illustrated. The UICC is originally in a normal running state. When the UICC is consistent with a suspension condition, the UICC is in a suspension process state according to a suspension command of the terminal device. When a suspension process of the UICC is failed, the UICC returns to a normal running state. When the suspension process of the UICC is successfully executed, the UICC is in a suspended state. When the UICC is in the suspended state and the UICC receives a recovery command sent by the terminal device, the UICC enters a recovery process state. When the state recovery of the UICC is failed, the UICC returns to the suspended state. When state recovery of the UICC succeeds, the UICC is recovered into the normal running state.

Steps of the smart card control method provided by the example will be described below.

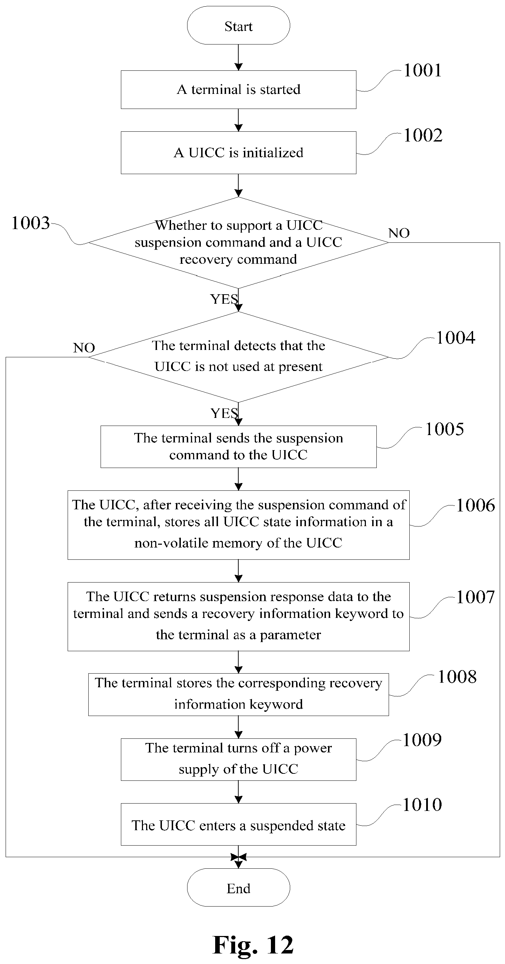

Referring to Fig. 12, a flow block diagram of a UICC suspension step according to the specific embodiment of the present invention example is illustrated. In the specific embodiment, a flow of the UICC suspension step is as follows.

In 1001, the terminal is started.

In 1002, the UICC is initialized.

In 1003, the UICC and the terminal negotiate about whether to support a UICC suspension command and a UICC recovery command or not.

Herein, a UICC EF 1 is extended in advance. The EF 1 or a bit thereof is adopted to indicate whether the UICC supports the UICC suspension command (suspended state) and the UICC recovery command (recovered state) or not. The terminal reads the EF 1 to judge whether the UICC supports the UICC suspension command and the UICC recovery command or not. When determining according to the EF1 that the UICC supports and if the terminal also supports, the UICC suspension command and the UICC recovery command may be sent to the UICC and 1004 is executed. If the terminal does not support (the condition that the terminal does not support is not considered in the method flow) or when determining that the UICC does not support, the flow is ended.

In 1004, the terminal detects that the UICC is not used at present.

Herein, during running of the terminal, when detecting, by the terminal, that the UICC is in an idle state and not used, 1005 is executed, otherwise the flow is ended.

In 1005, the terminal sends the suspension command to the UICC.

Herein, the suspension command includes a maximum suggested suspension time length.

In 1006, the UICC, after receiving the suspension command of the terminal, stores all UICC state information in a non-volatile memory of the UICC.

Herein, the UICC state information at least includes a state of an NAA selected by each logical channel, a security condition of each NAA, an EF selected by each logical channel, corresponding records and a state of a card application toolbox.

In 1007, the UICC returns suspension response data to the terminal and sends a recovery information keyword to the terminal as a parameter.

Herein, the UICC sends the recovery information keyword to the terminal for comparison during recovery of the UICC from the suspended state as the parameter in the suspension response data. In addition, the suspension response data further includes a suspension time length determined by the UICC.

In 1008, the terminal stores the corresponding recovery information keyword.

In 1009, the terminal turns off a power supply of the UICC.

Herein, the terminal sends a turn-off instruction to the power supply of the UICC to turn off the power supply of the UICC.

In 1010, the UICC enters the suspended state.

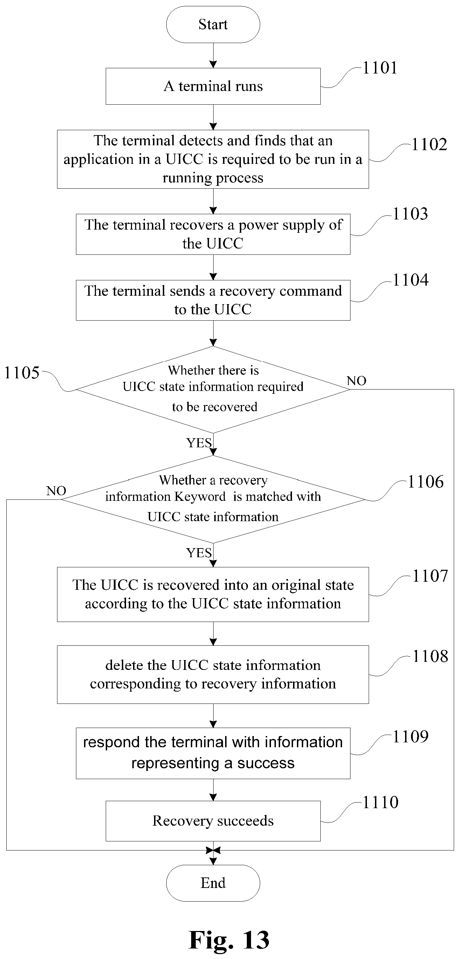

Fig. 13 is a flow block diagram of a UICC recovery step according to the example.

In the specific embodiment, a flow of the UICC recovery step is as follows.

In 1101, the terminal runs.

Herein, the UICC is in the suspended state in such case.

In 1102, the terminal detects and finds that an application in the UICC is required to be run in a running process.

In 1103, the terminal recovers the power supply of the UICC.

Herein, the terminal transmits a recovery instruction to the power supply of the UICC to recover the power supply of the UICC.

In 1104, the terminal sends a recovery command to the UICC.

Herein, the recovery command includes the recovery information keyword. In addition, when the UICC finds that the recovery condition is not met at present, the UICC may refuse to execute the recovery command and, in such case, the UICC give an error response to the terminal and may simultaneously notify a failure cause to the terminal in a manner of returning a state word. A condition inconsistent with the recovery condition includes, but not limited to, the following conditions: the UICC is executing a normal initialization process; the UICC is receiving a TERMINAL PROFILE command (active command); and/or the UICC is executing any EF name selection command.

In 1105, the UICC checks whether there is UICC state information required to be recovered in the non-volatile memory of the UICC or not.

Herein, if the UICC finds that there is no UICC state content required to be recovered in the non-volatile memory of the UICC, the UICC may refuse to execute the UICC recovery command and the flow is ended. If there is UICC state information required to be recovered in the non-volatile memory of the UICC, 1106 is executed.

In 1106, the UICC performs comparison to judge whether the recovery information keyword sent by the terminal is matched with the UICC state information to be recovered in the UICC or not.

Herein, if the recovery information keyword in the recovery command is mismatched with the UICC state information in the non-volatile memory of the UICC, the flow is ended. Herein, the UICC may give an error response to the terminal and simultaneously return a state word representing an error to notify an error cause to the terminal. If the recovery information keyword in the recovery command is matched with the UICC state information in the non-volatile memory of the UICC, that is, the recovery information keyword sent by the terminal is effective, 1107 is executed.

In 1107, the UICC is recovered into the original state of the UICC according to the UICC state information.

Herein, the UICC may be recovered into the state of the UICC before suspension according to the UICC state information. Before recovery according to the UICC state information, an initialization operation is executed on the UICC.

In 1108, the UICC deletes the UICC state information corresponding to recovery information.

In 1109, the UICC responds the terminal with information representing a success.

Herein, the UICC may return a state word representing that the command is successfully executed to the terminal.

In 1110, recovery succeeds.

For simple description, the abovementioned method is expressed as a combination of a series of actions. However, those skilled in the art should know that the present invention is not limited to a described action sequence because some steps may be executed in another sequence or at the same time according to the attached claims.

It is to be noted that, in the embodiments of the present invention, relationship terms such as first and second are only adopted to distinguish one entity or operation from another entity or operation and do not always require or imply existence of any practical relationship or sequence between these entities or operations.

The units described as separate parts may or may not be physically separated, and parts displayed as units may or may not be physical units, and namely may be located in the same place or may also be distributed to multiple network units. Part or all of the units may be selected to achieve the purpose of the solutions of the embodiments according to a practical requirement.

In addition, each function unit in each embodiment of the present invention may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present invention substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of steps of the method in each embodiment of the present invention. The storage medium includes: various media capable of storing program codes such as a U disk, a mobile hard disk, a Read-Only Memory (ROM), a Random Access Memory (RAM), a magnetic disk or an optical disk.

### Industrial Application

The technical solutions provided by the embodiments of the present invention may be applied to a smart card control process. The suspension command is transmitted to the smart card, so that the power supply of the smart card may be removed, power consumption of the smart card is further reduced, energy consumption of the terminal device is reduced and the service time of the battery of the terminal device is prolonged.

## Claims

1. A method for controlling a smart card, comprising:
transmitting a suspension command to a smart card (101);
receiving a recovery information keyword returned by the smart card according to the suspension command, and the recovery information keyword is used to recover the smart card from a suspended state (102); and **characterized by**
sending a turn-off instruction to a power supply of the smart card (103).

2. The control method as claimed in claim 1, before the step of transmitting the suspension command to the smart card, further comprising:
detecting whether a suspension condition of the smart card is presently reached, and when determining that the suspension condition is reached, executing the step of transmitting the suspension command to the smart card.

3. The control method as claimed in claim 2, wherein the step of determining that the suspension condition is reached comprises:
detecting a first present state of the smart card and
when detecting that the smart card is in an idle state, determining that the suspension condition is reached and transmitting the suspension command to the smart card; and/or
detecting a second present state of a terminal device and
when detecting that the terminal device is in a standby state, determining that the suspension condition is reached and transmitting the suspension command to the smart card.

4. The control method as claimed in claim 2, before the step of detecting whether the suspension condition of the smart card is presently reached or not, further comprising:
reading a preconfigured first Elementary File (EF); and
when determining according to the first EF that the smart card supports the suspended state, executing the step of detecting whether the suspension condition of the smart card is presently reached or not.

5. The control method as claimed in claim 1, wherein, in the step of transmitting the suspension command to the smart card,
the suspension command comprises a maximum suggested suspension time length; and
after the step of receiving the recovery information keyword returned by the smart card according to the suspension command and configured to recover the smart card from the suspended state, the control method further comprises:
receiving a determined suspension time length returned by the smart card.

6. The control method as claimed in claim 1, after the step of receiving the recovery information keyword returned by the smart card according to the suspension command and configured to recover the smart card from the suspended state, further comprising:
detecting whether a recovery condition of the smart card is presently met or not; and
when detecting that the smart card reaches the recovery condition, transmitting a recovery instruction to the power supply of the smart card and transmitting a recovery command to the smart card, wherein the recovery command comprises the recovery information keyword;

7. The control method as claimed in claim 6, before the step of detecting whether the recovery condition of the smart card is presently met or not, further comprising:
reading a preconfigured second EF; and
when determining according to the second EF that the smart card supports a recovered state, detecting whether the smart card reaches the recovery condition or not.

8. A method for controlling a smart card, comprising:
receiving a suspension command sent by a terminal device;
storing state information, used for recovery from a suspended state, of a smart card according to the suspension command;
sending a recovery information keyword used for recovery from the suspended state to the terminal device;
**characterized by** receiving a turn-off instruction from the terminal device to turn-off a power supply of the smart card.

9. The control method as claimed in claim 8, wherein
the state information comprises a state of a Network Access Application (NAA) selected by each logical channel of the smart card, a security condition of each NAA, an Elementary File (EF) selected by each logical channel, corresponding records and a state of a card application toolbox.

10. The control method as claimed in claim 8, wherein, in the step of receiving the suspension command sent by the terminal device,
the suspension command comprises a maximum suggested suspension time length; and
after the step of storing the state information, used for recovery from the suspended state, of the smart card according to the suspension command, the control method further comprises:
sending a determined suspension time length to the terminal device.

11. The control method as claimed in claim 8, after the step of storing the state information, used for recovery from the suspended state, of the smart card according to the suspension command, further comprising:
receiving a recovery command sent by the terminal device; and
executing an initialization operation according to the recovery command and recovering a state before suspension.

12. A device for controlling a smart card, comprising:
a first sending module (510), configured to transmit a suspension command to a smart card;
a first receiving module (520), configured to receive a recovery information keyword returned by the smart card according to the suspension command and configured to recover the smart card from a suspended state;
**characterized by** a second sending module (530), configured to send a turn-off instruction to a power supply of the smart card.

13. A device for controlling a smart card, comprising:
a first receiving module (710), configured to receive a suspension command sent by a terminal device; and
a storage module (720), configured to store state information, used for recovery from a suspended state, of a smart card according to the suspension command;
the device is further configured to send a recovery information keyword used for recovery from the suspended state to the terminal device, and is **characterized by** receive a turn-off instruction from the terminal device to turn-off a power supply of the smart card.

## Patentansprüche

1. Verfahren zum Kontrollieren einer Chipkarte, umfassend:
Übertragen eines Suspendierungsbefehls an eine Chipkarte (101);
Empfangen eines Wiederherstellungsinformationsschlüsselworts, das durch die Chipkarte gemäß dem Suspendierungsbefehl zurückgegeben wurde, wobei das Wiederherstellungsinformationsschlüsselwort verwendet wird, um die Chipkarte aus einem suspendierten Zustand wiederherzustellen (102); und **gekennzeichnet durch**
Senden einer Ausschaltanweisung an eine Stromversorgung der Chipkarte (103).

2. Kontrollverfahren nach Anspruch 1, vor dem Schritt des Übertragens des Suspendierungsbefehls an die Chipkarte, ferner umfassend:
Erkennen, ob gegenwärtig ein Suspendierungszustand der Chipkarte erreicht ist, und Ausführen des Schritts zum Übertragen des Suspendierungsbefehls an die Chipkarte, wenn festgestellt wurde, dass der Suspendierungszustand erreicht ist.

3. Kontrollverfahren nach Anspruch 2, wobei der Schritt des Feststellens, dass der Suspensionszustand erreicht ist, Folgendes umfasst:
Erkennen eines ersten gegenwärtigen Zustands der Chipkarte und
wenn erkannt wurde, dass sich die Chipkarte in einem Ruhezustand befindet, Feststellen, dass der Suspendierungszustand erreicht ist, und Übertragen des Suspendierungsbefehls an die Chipkarte; und/oder
Erkennen eines zweiten gegenwärtigen Zustands einer Endgerätevorrichtung und
wenn erkannt wurde, dass sich die Endgerätevorrichtung in einem Standby-Zustand befindet, Feststellen, dass der Suspendierungszustand erreicht ist, und Übertragen des Suspendierungsbefehls an die Chipkarte.

4. Kontrollverfahren nach Anspruch 2, vor dem Schritt des Erkennens, ob der Suspendierungszustand der Chipkarte gegenwärtig erreicht ist oder nicht, ferner umfassend:
Lesen einer vorkonfigurierten ersten Elementardatei (Elementary File, EF); und
wenn gemäß der ersten EF festgestellt wurde, dass die Chipkarte den suspendierten Zustand unterstützt, Ausführen des Schritts des Erkennens, ob der Suspendierungszustand der Chipkarte gegenwärtig erreicht ist oder nicht.

5. Kontrollverfahren nach Anspruch 1, wobei, in dem Schritt des Übertragens des Suspendierungsbefehls an die Chipkarte,
der Suspendierungsbefehl eine empfohlene maximale Suspendierungszeitdauer umfasst; und
nach dem Schritt des Empfangens des Wiederherstellungsinformationsschlüsselworts, das durch die Chipkarte gemäß dem Suspendierungsbefehl zurückgegeben wurde und konfiguriert ist, die Chipkarte aus dem Suspendierungszustand wiederherzustellen, wobei das Kontrollverfahren ferner Folgendes umfasst:
Empfangen einer durch die Chipkarte zurückgegebenen festgelegten Suspendierungszeitdauer.

6. Kontrollverfahren nach Anspruch 1, nach dem Schritt des Empfangens des Wiederherstellungsinformationsschlüsselworts, das durch die Chipkarte gemäß dem Suspendierungsbefehl zurückgegeben wurde und konfiguriert ist, die Chipkarte aus dem Suspendierungszustand wiederherzustellen, ferner umfassend:
Erkennen, ob eine Wiederherstellungsbedingung der Chipkarte gegenwärtig erfüllt ist oder nicht; und
wenn erkannt wurde, dass die Chipkarte den Wiederherstellungszustand erreicht, Übertragen einer Wiederherstellungsanweisung zur Stromversorgung der Chipkarte und Übertragen eines Wiederherstellungsbefehls an die Chipkarte, wobei der Wiederherstellungsbefehl das Wiederherstellungsinformationsschlüsselwort umfasst;

7. Kontrollverfahren nach Anspruch 6, vor dem Schritt des Erkennens, ob die Wiederherstellungsbedingung der Chipkarte gegenwärtig erfüllt ist oder nicht, ferner umfassend:
Lesen einer vorkonfigurierten zweiten EF; und
wenn gemäß der zweiten EF festgestellt wurde, dass die Chipkarte einen wiederhergestellten Zustand unterstützt, Erkennen, ob die Chipkarte den Wiederherstellungszustand erreicht oder nicht.

8. Verfahren zum Kontrollieren einer Chipkarte, umfassend:
Empfangen eines durch eine Endgerätevorrichtung gesendeten Suspendierungsbefehls;
Speichern von Zustandsinformationen einer Chipkarte gemäß dem Suspendierungsbefehl, die zur Wiederherstellung aus einem suspendierten Zustand verwendet werden;
Senden eines Wiederherstellungsinformationsschlüsselworts, das zur Wiederherstellung aus dem suspendierten Zustand verwendet wird, an die Endgerätevorrichtung;
**gekennzeichnet durch** Empfangen einer Ausschaltanweisung von der Endgerätevorrichtung zum Ausschalten einer Stromversorgung der Chipkarte.

9. Kontrollverfahren nach Anspruch 8, wobei
die Zustandsinformationen einen Zustand einer durch jeden logischen Kanal der Chipkarte ausgewählten Netzwerkzugriffsanwendung (Network Access Application, NAA), eine Sicherheitsbedingung jeder NAA, eine durch jeden logischen Kanal ausgewählte Elementardatei (EF) umfassen, die Datensätzen und einem Zustand einer Kartenanwendungs-Toolbox entsprechen.

10. Kontrollverfahren nach Anspruch 8, wobei, in dem Schritt des Empfangens des Suspendierungsbefehls von der Endgerätevorrichtung,
der Suspendierungsbefehl eine empfohlene maximale Suspendierungszeitdauer umfasst;
und
nach dem Schritt des Speicherns der Zustandsinformationen, die zur Wiederherstellung der Chipkarte aus dem suspendierten Zustand gemäß dem Suspendierungsbefehl verwendet werden, wobei das Kontrollverfahren ferner Folgendes umfasst:
Senden einer festgelegten Suspendierungszeitdauer an die Endgerätevorrichtung.

11. Kontrollverfahren nach Anspruch 8, nach dem Schritt des Speicherns der Zustandsinformationen, die zur Wiederherstellung der Chipkarte aus dem suspendierten Zustand gemäß dem Suspendierungsbefehl verwendet werden, ferner umfassend:
Empfangen eines Wiederherstellungsbefehls, der durch die Endgerätevorrichtung gesendet wird; und
Ausführen einer Initialisierungsoperation gemäß dem Wiederherstellungsbefehl und Wiederherstellen eines Zustands vor der Suspendierung.

12. Vorrichtung zum Kontrollieren einer Chipkarte, umfassend:
ein erstes Sendemodul (510), das konfiguriert ist, einen Suspendierungsbefehl Chipkarte zu übertragen;
ein erstes Empfangsmodul (520), das konfiguriert ist, ein Wiederherstellungsinformationsschlüsselwort zu empfangen, das durch die Chipkarte gemäß dem Suspendierungsbefehl zurückgegeben wurde und konfiguriert ist, die Chipkarte aus einem suspendierten Zustand wiederherzustellen;
**gekennzeichnet durch** ein zweites Sendemodul (530), das konfiguriert ist, eine Ausschaltanweisung an eine Stromversorgung der Chipkarte zu senden.

13. Vorrichtung zum Kontrollieren einer Chipkarte, umfassend:
ein erstes Empfangsmodul (710), das konfiguriert ist, einen durch eine Endgerätevorrichtung gesendeten Suspendierungsbefehl zu empfangen; und
ein Speichermodul (720), das konfiguriert ist, Zustandsinformationen zu speichern, die zur Wiederherstellung einer Chipkarte aus einem suspendierten Zustand gemäß dem Suspendierungsbefehl verwendet werden;
wobei die Vorrichtung ferner konfiguriert ist, ein Wiederherstellungsinformationsschlüsselwort, das zur Wiederherstellung aus dem suspendierten Zustand verwendet wird, an die Endgerätevorrichtung zu senden; und charakterisiert ist durch Empfangen einer Ausschaltanweisung von der Endgerätevorrichtung zum Ausschalten einer Stromversorgung der Chipkarte.

## Revendications

1. Procédé de commande d'une carte à puce, comprenant :
la transmission d'une commande de suspension à une carte à puce (101) ;
la réception d'un mot-clé d'information de récupération renvoyé par la carte à puce selon la commande de suspension et le mot-clé d'information de récupération est utilisé pour récupérer la carte à puce à partir d'un état suspendu (102) ; et **caractérisé par**
l'envoi d'une instruction de mise hors tension à une alimentation électrique de la carte à puce (103).

2. Procédé de commande selon la revendication 1, avant l'étape de transmission de la commande de suspension à la carte à puce, comprenant en outre :
la détection de si une condition de suspension de la carte à puce est actuellement atteinte et, lors de la détermination que la condition de suspension est atteinte, l'exécution de l'étape de transmission de la commande de suspension à la carte à puce.

3. Procédé de commande selon la revendication 2, dans lequel l'étape de détermination que la condition de suspension est atteinte comprend :
la détection d'un premier état actuel de la carte à puce et
lors de la détection que la carte à puce est dans un état inactif, la détermination que la condition de suspension est atteinte et la transmission de la commande de suspension à la carte à puce ; et/ou
la détection d'un deuxième état actuel d'un dispositif terminal et
lors de la détection que le dispositif terminal est dans un état de veille, la détermination que la condition de suspension est atteinte et la transmission de la commande de suspension à la carte à puce.

4. Procédé de commande selon la revendication 2, avant l'étape de détection de si la condition de suspension de la carte à puce est actuellement atteinte ou non, comprenant en outre :
la lecture d'un premier fichier élémentaire (Elementary File, EF) préconfiguré ; et
lors de la détermination selon le premier EF que la carte à puce prend en charge l'état suspendu, l'exécution de l'étape de détection de si la condition de suspension de la carte à puce est actuellement atteinte ou non.

5. Procédé de commande selon la revendication 1, dans lequel, à l'étape de transmission de la commande de suspension à la carte à puce,
la commande de suspension comprend une durée maximale de suspension suggérée ; et
après l'étape de réception du mot-clé d'information de récupération renvoyé par la carte à puce selon la commande de suspension et configuré pour récupérer la carte à puce à partir de l'état suspendu, le procédé de commande comprend en outre :
la réception d'une durée de suspension déterminée renvoyée par la carte à puce.

6. Procédé de commande selon la revendication 1, après l'étape de réception du mot-clé d'information de récupération renvoyé par la carte à puce selon la commande de suspension et configuré pour récupérer la carte à puce à partir de l'état suspendu, comprenant en outre :
la détection de si une condition de récupération de la carte à puce est actuellement satisfaite ou non ; et
lors de la détection que la carte à puce atteint la condition de récupération, la transmission d'une instruction de récupération à l'alimentation électrique de la carte à puce et la transmission d'une commande de récupération à la carte à puce, la commande de récupération comprenant le mot-clé d'information de récupération ;

7. Procédé de commande selon la revendication 6, avant l'étape de détection de si la condition de récupération de la carte à puce est actuellement satisfaite ou non, comprenant en outre :
la lecture d'un deuxième EF préconfiguré ; et
lors de la détermination selon le deuxième EF que la carte à puce prend en charge un état récupéré, la détection de si la carte à puce atteint la condition de récupération ou non.

8. Procédé de commande d'une carte à puce, comprenant :
la réception d'une commande de suspension envoyée par un dispositif terminal ;
le stockage d'informations d'état, utilisées pour la récupération à partir d'un état suspendu, d'une carte à puce selon la commande de suspension ;
l'envoi d'un mot clé d'information de récupération utilisé pour la récupération à partir de l'état suspendu au dispositif terminal ;
**caractérisé par** la réception d'une instruction de mise hors tension du dispositif terminal pour mettre hors tension une alimentation électrique de la carte à puce.

9. Procédé de commande selon la revendication 8, dans lequel
les informations d'état comprennent un état d'une application d'accès au réseau (Network Access Application, NAA) sélectionnée par chaque canal logique de la carte à puce, une condition de sécurité de chaque NAA, un fichier élémentaire (EF) sélectionné par chaque canal logique, des enregistrements correspondants et un état d'un boîte à outils d'application de carte.

10. Procédé de commande selon la revendication 8, dans lequel, à l'étape de réception de la commande de suspension envoyée par le dispositif terminal,
la commande de suspension comprend une durée maximale de suspension suggérée ; et après l'étape de stockage des informations d'état, utilisées pour la récupération à partir de l'état suspendu, de la carte à puce selon la commande de suspension, le procédé de commande comprend en outre :
l'envoi d'une durée de suspension déterminée au dispositif terminal.

11. Procédé de commande selon la revendication 8, après l'étape de stockage des informations d'état, utilisées pour la récupération à partir de l'état suspendu, de la carte à puce selon la commande de suspension, comprenant en outre :
la réception d'une commande de récupération envoyée par le dispositif terminal ; et
l'exécution d'une opération d'initialisation selon la commande de récupération et la récupération d'un état avant suspension.

12. Dispositif de commande d'une carte à puce, comprenant :
un premier module d'envoi (510), configuré pour transmettre une commande de suspension à une carte à puce ;
un premier module de réception (520), configuré pour recevoir un mot-clé d'information de récupération renvoyé par la carte à puce selon la commande de suspension et configuré pour récupérer la carte à puce à partir d'un état suspendu ;
**caractérisé par** un second module d'envoi (530), configuré pour envoyer une instruction de mise hors tension à une alimentation électrique de la carte à puce.

13. Dispositif de commande d'une carte à puce, comprenant :
un premier module de réception (710), configuré pour recevoir une commande de suspension envoyée par un dispositif terminal ; et
un module de stockage (720), configuré pour stocker des informations d'état, utilisées pour la récupération à partir d'un état suspendu, d'une carte à puce selon la commande de suspension ;
le dispositif est en outre configuré pour envoyer un mot-clé d'information de récupération utilisé pour la récupération à partir de l'état suspendu au dispositif terminal et est **caractérisé par** la réception d'une instruction de mise hors tension du dispositif terminal pour mettre hors tension l'alimentation électrique de la carte à puce.
